# EUROPÄISCHE PATENTSCHRIFT

(11) **EP 2 435 594 B1**
(45) Veröffentlichungstag und Bekanntmachung des Hinweises auf die Patenterteilung: **23.01.2013**
(21) Anmeldenummer: 10702643.7
(22) Anmeldetag: 25.01.2010
(51) Int. Cl.: C23C 4/06, C23C 4/08, C23C 4/18, F16C 33/12, F16J 1/02, F16J 9/26, F16J 10/04

(54) **GLEITELEMENT MIT FREIGELEGTER FUNKTIONSFLÄCHE**
SLIDING ELEMENT WITH EXPOSED FUNCTIONAL SURFACE
ÉLÉMENT GLISSANT DOTÉ D'UNE SURFACE FONCTIONNELLE À NU

(30) Priorität: 27.05.2009 DE 102009022804
(43) Veröffentlichungstag der Anmeldung: 04.04.2012
(73) Patentinhaber: Federal-Mogul Burscheid GmbH, 51399 Burscheid (DE)
(72) Erfinder: KENNEDY, Marcus, 40479 Düsseldorf (DE); MATZ, Marc-Manuel, 86316 Friedberg (DE)
(74) Vertreter: Becker Kurig Straus
(86) Internationale Anmeldenummer: PCT/EP2010/050779
(87) Internationale Veröffentlichungsnummer: WO 2010/136223

(56) Entgegenhaltungen:
- EP-A1- 0 411 322
- EP-A1- 0 449 356
- EP-A1- 0 770 698
- WO-A1-97/16577
- WO-A1-97/16578
- DE-A1- 19 506 568

## Beschreibung

Die vorliegende Erfindung betrifft ein Gleitelement, insbesondere für eine Verbrennungskraftmaschine, mit einer thermisch gespritzten Beschichtung, die eine freigelegte Funktionsfläche aufweist.

In der heutigen Zeit werden im Bereich des Kurbeltriebs hohe Anforderungen hinsichtlich Verschleißeigenschaften, Wärmeleitfähigkeit, Festigkeit und Gewicht an dessen Bauteile gestellt. Aus diesem Grund werden diese Bauteile zunehmend aus Leichtmetallen gefertigt. An den Kontaktflächen kommt es zu Misch- bis hin zu Festkörperreibung, die zu hohen Reibungsverlusten als auch hohem Verschleiß (z.B. Micro-Welding durch Metallübertrag von Aluminiumoberflächen der Kontaktpartner) führen können.

Dabei rückt die Verbundbauweise in den Fokus der Entwicklung. Das thermische Spritzen bietet zu diesem Zweck hervorragende Möglichkeiten. Durch dieses Verfahren lassen sich kostengünstig Funktionsflächen herstellen, die diese Anforderungen erfüllen und darüber hinaus die tribologischen Eigenschaften von miteinander in Kontakt stehenden Bauteilen verbessern.

Derzeitig sind einige thermisch gespritzte Funktionsoberflächen in der Technik bekannt vollgespritzte Laufbuchse, thermisch gespritzte Innenbeschichtungen sowie thermisch gespritzte Ringnutarmierungen. Dabei finden sog. Pseudolegierungen Anwendung. Dies sind Spritzmaterialgefüge, welche aus zwei oder mehreren unterschiedlichen Werkstoffphasen bestehen, um die Vorteile der einzelnen Werkstoffe miteinander zu verbinden. Eine Materialphase besteht in der Regel aus einem Leichtmetall, wie etwa einer Aluminiumbasislegierung, sowie aus mindestens einer weiteren, meist hochfesten Phase, wie beispielsweise Siliziumkarbid.

Es ist bekannt, ein kommunizierendes System, beispielsweise auf Zylinderlaufbahnen von Brennkraftmaschinen, durch Honen zu erzielen. Hierbei entstehen sich kreuzende Riefen, welche an den Kreuzungsbereichen miteinander verbunden sind und somit insgesamt ein offenes System darstellen. Nachteilig hierbei ist, dass ein auf der Gleitfläche gleitende Element, beispielsweise ein Kolbenring eines Kolbens einer Brennkraftmaschine, das in den Riefen befindliche Öl vor sich her schiebt, anstatt einen hydrodynamischen Öldruck aufzubauen. Daher kommt es an den Riefenkanten zu einer Mischreibung zwischen den beteiligten Gleitpartnern.

Die Aufgabe der Erfindung besteht darin, die Materialien der Kontaktflächen sowie die Kontaktfläche selbst so herzustellen, dass optimale tribologische mit entsprechend notwendigen physikalischen Eigenschaften dargestellt werden.

Gemäß einem ersten Aspekt der Erfindung wird ein Gleitelement bereitgestellt, umfassend:
- einen Träger; und
- eine mittels thermischen Spritzens auf den Träger aufgetragene Beschichtung;
wobei
- die Beschichtung mindestens zwei Phasen umfasst; und
- mindestens eine der mindestens zwei Phasen gegenüber der bzw. den anderen Phasen zurückgesetzt wird.

Gemäß einer Ausführungsform ist das Gleitelement ein Kolbenring, eine Lagerschale, eine Laufbuchse oder ein Kolben.

Gemäß einer Ausführungsform weisen die mindestens zwei Phasen verschiedene Festigkeiten auf, und weist die zurückgesetzte Phase die geringste Festigkeit auf.

Die Lösung der Aufgabe besteht darin, die thermisch gespritzten Laufflächen so zu verändern, dass die Leichtnetallphase gegenüber der verschleißbeständigeren Phase zurückgesetzt wird, wodurch die Lebensdauer verlängert wird. Weiterhin entstehen durch das Zurücksetzen zusätzliche Mikrokammerdnicksysteme, was dazu führt, dass der Anteil der hydrodynamischen Reibung im Betrieb erhöht werden kann.

Die Anwendung einer thermischen Spritzschicht, die durch zusätzliche Prozesse teilweise zurückgesetzt und damit freigelegt wird, führt zur Darstellung eines neuen Bauteils. Das Bauteil ist beispielsweise als ein Gleitelement wie etwa ein Kolbenring, eine Laufbuchse, eine Lagerschale oder eine Kolbennutarmierung ausgeführt.

Gemäß einer Ausführungsform
- besteht die zurückgesetzte Phase aus einer Metall-Basislegierung; und
- weist das in der zurückgesetzten Phase am häufigsten vorkommende Element eine Ordnungszahl < 14 aus dem Periodensystem der Elemente auf.

Gemäß einer Ausführungsform erfolgt die Freilegung der zurückgesetzten Phase mechanisch oder chemisch.

Gemäß einer Ausführungsform beträgt die Freilegetiefe, definiert über die reduzierte Riefentiefe Rᵥₖ der zurückgesetzten Phase, 0,5 µm - 6 µm.

Gemäß einer Ausführungsform ist das Gleitelement ein Kolbenring, der aus Gussmaterial oder Stahl hergestellt ist.

Gemäß einer Ausführungsform ist das Gleitelement ein Kolben, der aus einer Aluminium- oder Magnesium-Basislegierung hergestellt ist.

Gemäß einer Ausführungsform ist der Kolben gegossen oder geschmiedet.

Gemäß einer Ausführungsform
- weist der Kolben mindestens eine Ringnut auf; und
- ist mindestens eine Ringnut mit der Beschichtung versehen.

Gemäß einer Ausführungsform
- weist der Kolben mindestens zwei Ringnuten auf; und
- ist der Steg zwischen den mindestens zwei Ringnuten mit der Beschichtung versehen.

Gemäß einem zweiten Aspekt der Erfindung wird ein Verfahren zur Herstellung eines Gleitelements bereitgestellt, umfassend:
- Bereitstellen eines Trägers;
- Aufbringen, mittels thermischen Spritzens, einer Beschichtung auf den Träger, wobei die Beschichtung mindestens zwei Phasen umfasst; und
- Zurücksetzen von mindestens einer der mindestens zwei Phasen gegenüber der bzw. den anderen Phasen.

Gemäß einer Ausführungsform ist das Gleitelement ein Kolbenring, eine Lagerschale, eine Laufbuchse oder ein Kolben.

Gemäß einer Ausführungsform weisen die mindestens zwei Phasen verschiedene Festigkeiten auf, und die zurückgesetzte Phase weist die geringste Festigkeit auf.

Gemäß einer Ausführungsform
- besteht die zurückgesetzte Phase aus einer Metall-Basislegierung; und
- weist das in der zurückgesetzten Phase am häufigsten vorkommende Element eine Ordnungszahl < 14 aus dem Periodensystem der Elemente auf.

Gemäß einer Ausführungsform erfolgt die Freilegung der zurückgesetzten Phase mechanisch oder chemisch.

Gemäß einer Ausführungsform beträgt die Freilegetiefe, definiert über die reduzierte Riefentiefe Rᵥₖ der zurückgesetzten Phase, 0,5 µm - 6 µm.

Gemäß einer Ausführungsform ist das Gleitelement ein Kolbenring und wird aus Gussmaterial oder Stahl hergestellt.

Gemäß einer Ausführungsform ist das Gleitelement ein Kolben und wird aus einer Aluminium- oder Magnesium-Basislegierung hergestellt.

Gemäß einer Ausführungsform wird der Kolben gegossen oder geschmiedet.

Gemäß einer Ausführungsform
- wird mindestens eine Ringnut in dem Kolben vorgesehen; und
- wird mindestens eine Ringnut mit der Beschichtung versehen.

Gemäß einer Ausführungsform
- werden mindestens zwei Ringnuten in dem Kolben vorgesehen; und
- wird der Steg zwischen den mindestens zwei Ringnuten mit der Beschichtung versehen.

### Kurze Beschreibung der Zeichnung

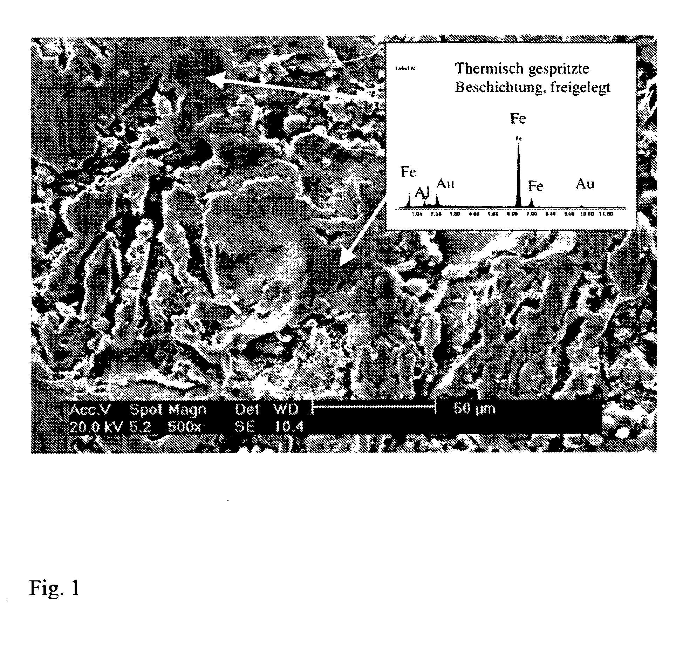

Die Erfindung wird im Folgenden anhand von Ausführungsbeispielen beschrieben, unter Bezug auf die beiliegende Zeichnung, in der
- Fig. 1: eine freilegte thermisch gespritzte Beschichtung gemäß einer Ausführungsform zeigt.

### Detaillierte Beschreibung der Erfindung

Figur 1 zeigt eine Aufnahme einer thermisch gespritzten Schicht für ein Gleitelement nach Freilegung der Aluminium-basierten Matrix. Hier wurde eine Aluminiummatrix gegenüber einer Eisenmatrix zurückgesetzt. Die Freilegetiefe, definiert über die reduzierte Riefentiefe Rᵥₖ, beträgt 5 µm.

## Patentansprüche

1. Kolben oder Kolbenring, umfassend:
- einen Träger; und
- eine mittels thermischen Spritzens auf den Träger aufgetragene Beschichtung;
wobei
- die Beschichtung mindestens zwei Phasen umfasst, die verschiedene Festigkeiten aufweisen; und
- eine der mindestens zwei Phasen gegenüber der bzw. den anderen Phasen zurückgesetzt ist, wobei die zurückgesetzte Phase die geringste Festigkeit aufweist.

2. Kolben oder Kolbenring nach einem der vorhergehenden Ansprüche, wobei
- die zurückgesetzte Phase aus einer Metall-Basislegierung besteht; und
- das in der zurückgesetzten Phase am häufigsten vorkommende Element eine Ordnungszahl < 14 aus dem Periodensystem der Elemente aufweist.

3. Kolben oder Kolbenring nach einem der vorhergehenden Ansprüche, wobei
- die Freilegung der zurückgesetzten Phase mechanisch oder chemisch erfolgt.

4. Kolben oder Kolbenring nach einem der vorhergehenden Ansprüche, wobei
- die Freilegetiefe, definiert über die reduzierte Riefentiefe Rᵥₖ der zurückgesetzten Phase, 0,5 µm - 6 µm beträgt.

5. Kolbenring nach einem der vorhergehenden Ansprüche, wobei
- der Kolbenring aus Gussmaterial oder Stahl hergestellt ist.

6. Kolben nach einem der Ansprüche 1 bis 4, wobei
- der Kolben aus einer Aluminium- oder Magnesium-Basislegierung hergestellt ist.

7. Kolben nach Anspruch 6, wobei
- der Kolben gegossen oder geschmiedet ist.

8. Kolben nach einem der Ansprüche 6 oder 7, wobei
- der Kolben mindestens eine Ringnut aufweist; und
- mindestens eine Ringnut mit der Beschichtung versehen ist.

9. Kolben nach Anspruch 8, wobei
- der Kolben mindestens zwei Ringnuten aufweist; und
- der Steg zwischen den mindestens zwei Ringnuten mit der Beschichtung versehen ist.

10. Verfahren zur Herstellung eines Kolbens oder Kolbenrings, umfassend:
- Bereitstellen eines Trägers;
- Aufbringen, mittels thermischen Spritzens, einer Beschichtung auf den Träger, wobei die Beschichtung mindestens zwei Phasen umfasst, die verschiedene Festigkeiten aufweisen; und
- Zurücksetzen von einer der mindestens zwei Phasen gegenüber der bzw. den anderen Phasen, wobei die zurückgesetzte Phase die geringste Festigkeit aufweist.

11. Verfahren nach Anspruch 10, wobei
- die zurückgesetzte Phase aus einer Metall-Basislegierung besteht; und
- das in der zurückgesetzten Phase am häufigsten vorkommende Element eine Ordnungszahl < 14 aus dem Periodensystem der Elemente aufweist.

12. Verfahren nach einem der Ansprüche 10 oder 11, wobei
- die Freilegung der zurückgesetzten Phase mechanisch oder chemisch erfolgt.

13. Verfahren nach einem der Ansprüche 10 bis 12, wobei
- die Freilegetiefe, definiert über die reduzierte Riefentiefe Rₖ der zurückgesetzten Phase, 0,5 µm - 6 µm beträgt.

14. Verfahren nach einem der Ansprüche 10 bis 13, wobei
- der Kolbenring aus Gussmaterial oder Stahl hergestellt wird.

15. Verfahren nach einem der Ansprüche 10 bis 13, wobei
- der Kolben aus einer Aluminium- oder Magnesium-Basislegierung hergestellt wird.

16. Verfahren nach Anspruch 15, wobei
- der Kolben gegossen oder geschmiedet wird.

17. Verfahren nach einem der Ansprüche 15 oder 16, wobei
- mindestens eine Ringnut in dem Kolben vorgesehen wird; und
- mindestens eine Ringnut mit der Beschichtung versehen wird.

18. Verfahren nach Anspruch 17, wobei
- mindestens zwei Ringnuten in dem Kolben vorgesehen werden; und
- der Steg zwischen den mindestens zwei Ringnuten mit der Beschichtung versehen wird.

## Claims

1. A piston or piston ring, comprising:
- a support; and
- a coating applied on the support by means of thermal spraying; wherein
- the coating comprises at least two phases which have different strengths; and
- one of the at least two phases is recessed with respect to the other phase or phases, wherein the recessed phase has the lowest strength.

2. The piston or piston ring according to any one of the preceding claims, wherein
- the recessed phase comprises a metal-based alloy; and
- the element most frequently occurring in the recessed phase has an ordinal number < 14 from the periodic table.

3. The piston or piston ring according to any one of the preceding claims, wherein
- the exposure of the recessed phase takes place mechanically or chemically.

4. The piston or piston ring according to any one of the preceding claims, wherein
- the exposure depth, defined over the reduced groove depth Rᵥₖ of the recessed phase, amounts to 0.5 µm - 6 µm.

5. The piston ring according to any one of the preceding claims, wherein
- the piston ring is produced from casting material or steel.

6. The piston according to any one of claims 1 to 4, wherein
- the piston is produced from an aluminium-based or magnesium-based alloy.

7. The piston according to claim 6, wherein
- the piston is cast or forged.

8. The piston according to any one of claims 6 or 7, wherein
- the piston comprises at least one annular groove; and
- at least one annular groove is provided with the coating.

9. The piston according to claim 8, wherein
- the piston comprises at least two annular grooves; and
- the web between the at least two annular grooves is provided with the coating.

10. A method for producing a piston or piston ring, comprising:
- making available a support;
- application, by means of thermal spraying, of a coating on the support, wherein the coating comprises at least two phases which have different strengths; and
- recessing of one of the at least two phases with respect to the other phase or phases, wherein the recessed phase has the lowest strength.

11. The method according to claim 10, wherein
- the recessed phase comprises a metal-based alloy; and
- the element most frequently occurring in the recessed phase has an ordinal number < 14 from the periodic table.

12. The method according to any one of claims 10 or 11, wherein
- the exposure of the recessed phase takes place mechanically or chemically.

13. The method according to any one of claims 10 to 12, wherein
- the exposure depth, defined over the reduced groove depth Rᵥₖ of the recessed phase, amounts to 0.5 µm - 6 µm.

14. The method according to any one of claims 10 to 13, wherein
- the piston ring is produced from casting material or steel.

15. The method according to any one of claims 10 to 13, wherein
- the piston is produced from an aluminium-based or magnesium-based alloy.

16. The method according to claim 15, wherein
- the piston is cast or forged.

17. The method according to any one of claims 15 or 16, wherein
- at least one annular groove is provided in the piston; and
- at least one annular groove is provided with the coating.

18. The method according to claim 17, wherein
- at least two annular grooves are provided in the piston; and
- the web between the at least two annular grooves is provided with the coating.

## Revendications

1. Piston ou segment de piston, comprenant :
- un support ; et
- un revêtement appliqué sur le support par projection thermique ;
- le revêtement comprenant au moins deux phases, qui font preuve de solidités différentes ; et
- l'une des au moins deux phases étant déportée par rapport à l'autre ou aux autres phases, la phase déportée faisant preuve de la solidité moindre.

2. Piston ou segment de piston selon l'une quelconque des revendications précédentes,
- la phase déportée étant constituée d'un alliage métallique de base ; et
- l'élément le plus souvent présent dans la phase déportée présentant un nombre atomique < 14 de la table périodique des éléments.

3. Piston ou segment de piston selon l'une quelconque des revendications précédentes,
- la mise à nu de la phase déportée s'effectuant par moyen mécanique ou chimique.

4. Piston ou segment de piston selon l'une quelconque des revendications précédentes,
- la profondeur de mise à nu, définie par l'intermédiaire de la profondeur réduite des stries Rᵥₖ de la phase déportée étant de 0,5 µm à 6 µm.

5. Segment de piston selon l'une quelconque des revendications précédentes,
- le segment de piston étant fabriqué en fonte ou en acier.

6. Piston selon l'une quelconque des revendications 1 à 4,
- le piston étant fabriqué en un alliage de base d'aluminium ou de magnésium.

7. Piston selon la revendication 6,
- le piston étant coulé ou forgé.

8. Piston selon l'une quelconque des revendications 6 ou 7,
- le piston comportant au moins une rainure annulaire ; et
- au moins une rainure annulaire étant munie du revêtement.

9. Piston selon la revendication 8,
- le piston comportant au moins deux rainures annulaires ; et
- la nervure entre les au moins deux rainures annulaires étant munie du revêtement.

10. Procédé de fabrication d'un piston ou d'un segment de piston, comprenant :
- la mise à disposition d'un support ;
- l'application, par projection thermique d'un revêtement sur le support, le revêtement comprenant au moins deux phases, qui font preuve de solidités différentes ; et
- le déport de l'une des au moins deux phases par rapport à l'autre ou aux autres phases, la phase déportée faisant preuve de la solidité moindre.

11. Procédé selon la revendication 10,
- la phase déportée étant constituée d'un alliage métallique de base ; et
- l'élément le plus souvent présent dans la phase déportée présentant un nombre atomique < 14 de la table périodique des éléments.

12. Procédé selon l'une quelconque des revendications 10 ou 11,
- la mise à nu de la phase déportée s'effectuant par moyen mécanique ou chimique.

13. Procédé selon l'une quelconque des revendications 10 à 12,
- la profondeur de mise à nu, définie par l'intermédiaire de la profondeur réduite des stries Rₖ de la phase déportée étant de 0,5 µm à 6 µm.

14. Procédé selon l'une quelconque des revendications 10 à 13,
- dans lequel on fabrique le segment de piston en fonte ou en acier.

15. Procédé selon l'une quelconque des revendications 10 à 13,
- dans lequel on fabrique le piston en un alliage de base d'aluminium ou de magnésium.

16. Procédé selon la revendication 15,
- dans lequel on coule ou on forge le piston.

17. Procédé selon l'une quelconque des revendications 15 ou 16,
- dans lequel on prévoit au moins une rainure annulaire dans le piston ; et
- dans lequel on revêt au moins une rainure annulaire du revêtement.

18. Procédé selon la revendication 17,
- dans lequel on prévoit au moins deux rainures annulaires dans le piston ; et
- dans lequel on munit la nervure entre les au moins deux rainures annulaires du revêtement.
